# EUROPÄISCHE PATENTSCHRIFT

(11) **EP 3 937 504 B1**
(45) Veröffentlichungstag und Bekanntmachung des Hinweises auf die Patenterteilung: **30.08.2023**
(21) Anmeldenummer: 20184496.6
(22) Anmeldetag: 07.07.2020
(51) Int. Cl.: H04Q 9/00, H04W 24/00

(54) **VERFAHREN ZUR UNTERSTÜTZUNG DES VERBESSERTEN BETRIEBS UND ZUR ERKENNUNG DER POSITIONIERUNG EINER ANTENNENEINRICHTUNG, SYSTEM, GERÄTEMANAGEMENTEINRICHTUNG, COMPUTERPROGRAMM UND COMPUTERLESBARES MEDIUM**
METHOD FOR SUPPORTING ENHANCED OPERATION OF AND DETECTING THE POSITIONING OF AN ANTENNA DEVICE, SYSTEM, DEVICE MANAGEMENT DEVICE, COMPUTER PROGRAM AND COMPUTER READABLE MEDIUM
PROCÉDÉ D'AIDE AU FONCTIONNEMENT AMÉLIORÉ ET DE DÉTECTION DU POSITIONNEMENT D'UN DISPOSITIF D'ANTENNE, SYSTÈME, DISPOSITIF DE GESTION DES APPAREILS, PROGRAMME INFORMATIQUE ET SUPPORT LISIBLE PAR ORDINATEUR

(43) Veröffentlichungstag der Anmeldung: 12.01.2022
(73) Patentinhaber: Deutsche Telekom AG, 53113 Bonn (DE)
(72) Erfinder: MINOW, Jascha, 64625 Bensheim (DE); JAHN, Carl, 65191 Wiesbaden (DE); EL-MALLOUKI, Said, 56329 St. Goar (DE); PLATSCHEK, Martin Michael, 13347 Berlin (DE)
(74) Vertreter: Schwöbel, Thilo K.

(56) Entgegenhaltungen:
- WO-A1-2009/097282
- WO-A2-2013/111159
- US-A1- 2017 094 471

## Beschreibung

### Stand der Technik

Die Erfindung betrifft ein Verfahren zur Unterstützung des verbesserten Betriebs und zur Erkennung der Positionierung einer Antenneneinrichtung zur Benutzung mit oder in einem Telekommunikationsnetz.

Die Erfindung betrifft des Weiteren ein System zur Unterstützung des verbesserten Betriebs und zur Erkennung der Positionierung einer Antenneneinrichtung zur Benutzung mit oder in einem Telekommunikationsnetz.

Die Erfindung betrifft ferner ein Antenneneinrichtung zur Unterstützung des verbesserten Betriebs und zur Erkennung ihrer Positionierung zur Benutzung mit oder in einem Telekommunikationsnetz.

Ferner betrifft die Erfindung eine Gerätemanagementeinrichtung zur Unterstützung des verbesserten Betriebs und zur Erkennung der Positionierung einer zugeordneten Antenneneinrichtung zur Benutzung mit oder in einem Telekommunikationsnetz.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Zur Bereitstellung von Kommunikationsdiensten, insbesondere Internetkonnektivität, an Kunden eines Telekommunikationsnetzes mittels Funktechnik, insbesondere unter Nutzung von 5G Mobilfunktechnologie, ist es bekannt, Antenneneinrichtungen in Form von sogenannten FWA-Antennen, d.h. Antennen zum drahtlosen Netzzugang über Funktechnologie - im Englischen als "Fixed Wireless Access" bezeichnet - zu verwenden. Die derzeit verwendeten 5G Frequenzbänder bzw. -spektralbereiche liegen in der Regel oder zumindest zum Teil bei vergleichsweise hohen Frequenzen, welche keine sehr hohe Reichweite und insbesondere keine große Gebäudedurchdringung aufweisen. Somit ist es - insbesondere bei der Verwendung von 5G-Spektralbereichen bzw. -Frequenzbändern - erforderlich, dass aufgrund insbesondere der geringeren Reichweite (in Luft) von solchen höherfrequenten Funksignalen in zumindest einem Teil des 5G Spektrums eine größere Anzahl an Basistationen mit einem engeren Radius bzw. eine höhere geographische Dichte von Basisstationen realisiert werden muss, um das beste Kundenerlebnis zu ermöglichen; daher müssen neue Standorte für Basistationen geschaffen und die benötigte Infrastruktur (Glasfaser, Strom usw.) an diesen neuen Standorten bereitgestellt werden. Um Kunden und Nutzern von 5G Technologie, vor allem im geschäftlichen Bereich, die Nutzung von 5G auch in Innenräumen mit akzeptabler Signalstärke und damit Performance und Bandbreite zu ermöglichen, ist es bekannt Fixed Wireless Access (FWA) 5G Antennen zu verwenden. Allerdings ist es zur Sicherstellung einer akzeptablen Signalstärke und Performance von 5G erforderlich, dass eine solche 5G-Antenne oder Antenneneinrichtung in bestimmter Weise angebracht bzw. montiert wird, so dass bei der Montage der Antenneneinrichtung Fehlinstallationen vermieden werden.

Weitere Verfahren sind aus den Druckschriften WO2013/111159A2, WO2009/097282A1 und US2017/094471A1 bekannt.

### Offenbarung der Erfindung

Der Erfindung liegt die Aufgabe zugrunde, ein optimiertes Verfahren zur Unterstützung des verbesserten Betriebs und zur Erkennung der Positionierung einer Antenneneinrichtung bereitzustellen, wobei es das Verfahren in vergleichsweise einfacher und effizienter Weise ermöglicht, eine Fehlinstallation der Antenneneinrichtung möglichst frühzeitig zu erkennen.

Die Aufgabe wird erfindungsgemäß gelöst durch ein Verfahren gemäß Anspruch 1.

Es ist dadurch gemäß der vorliegenden Erfindung in vorteilhafter Weise möglich, dass in vergleichsweise einfacher Art und Weise feststellbar ist bzw. ermittelt werden kann (bzw. dass hierüber zumindest ein Schätzwert oder eine Indikatorinformation mit einem hohen Vertrauensgrad generierbar ist), ob eine betrachtete Antenneneinrichtung innerhalb des betreffenden Gebäudes oder außerhalb davon angebracht oder positioniert ist. Um eine akzeptable Signalstärke und Performance von Antenneneinrichtungen zu ermöglichen, ist es in aller Regel zwingend notwendig, diese Antennen aussen am Gebäude anzubringen und nicht im Gebäude selbst. Um Kundenzufriedenheit zu gewährleisten, aber auch um überflüssige, durch Fehlinstallationen innerhalb eines Gebäudes (statt aussen am Gebäude) erzeugte Supporttickets zu vermeiden, ist es vorteilhaft, den Standort der Antenneneinrichtung - d.h. insbesondere ob die Antenneneinrichtung innen oder aussen des Gebäudes montiert wurde - möglichst zweifelsfrei zu bestimmen.

Erfindungsgemäß ist die Antenneneinrichtung insbesondere als eine FWA-Antenneneinrichtung vorgesehen, d.h. als eine Fixed Wireless Access-Antenneneinrichtung, deren Hauptzweck darin besteht, dass an ihrem Installationsort (bzw. in unmittelbarer räumlicher Nähe, d.h. innerhalb von Entfernungen (von wenigen oder mehreren Metern oder von wenigen oder mehreren 10 Metern), die mit vergleichsweise geringem Aufwand auch unter Nutzung einer WLAN-Funkübertragungsstrecke oder aber mittels einer Kabelverbindung (sei es, typischerweise, mittels LAN- oder Ethernetkabel oder auch mittels Koaxialkabel) überbrückt werden können) entweder überhaupt eine bedarfsgemäße Versorgung mit Kommunikationsdiensten, insbesondere Internetkonnektivität, an Kunden des Telekommunikationsnetzes zur Verfügung gestellt werden kann oder aber eine ergänzende Versorgung mit Kommunikationsdiensten, insbesondere Internetkonnektivität, insbesondere zusätzlich zu einer kabelgebundenen Festnetzkonnektivität, etwa über eine DSL-Verbindung, zur Verfügung gestellt werden kann.

Alternativ hierzu ist es erfindungsgemäß auch vorgesehen, dass die Antenneneinrichtung an ihrem Installationsort nicht primär eine Versorgung mit Kommunikationsdiensten für Client-Geräte an diesem Installationsort, insbesondere Internetkonnektivität, zur Verfügung stellt, sondern umgekehrt als Basisstation verwendet wird, um an anderen Installationsorten (von anderen FWA-Antenneneinrichtungen) Kommunikationsdienste, insbesondere Internetkonnektivität, zur Verfügung zu stellen. Dies setzt voraus, dass eine entsprechend hochbandbreitige Netzanbindung am Installationsort einer solchen, als Basisstation verwendeten Antenneneinrichtung vorhanden ist. Somit ist es gemäß der vorliegenden Erfindung möglich, dass es Kunden, denen bereits eine vergleichsweise schnelle Internetverbindung (z.B. Glasfaser) zur Verfügung steht, ermöglicht wird, selbst 5G Basisstations-Antennen (d.h. Basisstations- Antenneneinrichtung) - etwa an deren Haus bzw. Außenwand - zu montieren, um anderen Geräten an anderen Standorten (wie etwa Smartphones, oder auch andere FWA-Antenneneinrichtungen, Laptops usw...), welche einen 5G Netzzugang benötigen, diesen zu ermöglichen. Dies ermöglicht es, den Ausbau von 5G besonders dort zu beschleunigen, wo der Bedarf am Größten ist und wo auch bereits die Netzzugangsinfrastruktur direkt beim Endkunde verfügbar ist; ferner kann dadurch auch die Standortbetreuung einfacher gestaltet werden. Selbstverständlich ist es erfindungsgemäß auch möglich und bevorzugt, dass die Funktionalität einer FWA-Antenneneinrichtung und die Funktionalität einer Basisstations-Antenneneinrichtung kombiniert miteinander in einem Gerät oder in einer Anordnung kombiniert ist bzw. wird, um insbesondere flexibel verschiedene Betriebsmodi zu ermöglichen.

Das erfindungsgemäße Verfahren ermöglicht es sowohl im Fall einer FWA-Antenneneinrichtung (d.h. zur Realisierung eines Netzzugangs für die FWA-Antenneneinrichtung bzw. die durch sie versorgten bzw. an sie angeschlossenen Geräte) als auch im Fall einer Basisstations-Antenneneinrichtung (d.h. zur Zurverfügungstellung eines Netzzugangs für andere FWA-Antenneneinrichtungen bzw. die durch sie versorgten bzw. an sie angeschlossenen Geräte) in vergleichsweise einfacher und effizienter Weise, eine Fehlinstallation einer solchen Antenneneinrichtung möglichst frühzeitig zu erkennen.

Im Rahmen der vorliegenden Erfindungsoffenbarung wird durchweg von Antenneneinrichtung gesprochen, wenn sowohl eine FWA-Antenneneinrichtung als auch eine Basisstationseinrichtung (bzw. eine Kombination aus beiden) gemeint ist.

Erfindungsgemäß ist es vorgesehen, dass die Antenneneinrichtung eine Sensoreinrichtung aufweist, die wenigstens eine Messwertinformation erfasst. Somit ist es erfindungsgemäß vorteilhaft möglich, die wenigstens eine Messwertinformation - jedoch bevorzugt eine Mehrzahl an Messwertinformationen - dazu zu verwenden festzustellen, ob die Antenneneinrichtung innerhalb oder außerhalb des betreffenden Gebäudes angebracht ist. Typischerweise ist eine solche Antenneneinrichtung bereits mit Strom versorgt, um ihren Betrieb zu gewährleisten. Erfindungsgemäß weist die Antenneneinrichtung daher die Sensoreinrichtung auf - insbesondere als ein Temperatur- und/oder UV-B-Sensor, so dass die Umgebungstemperatur und/oder die UV-B-Strahlungsintensität gemessen werden kann (sowie auch ein Abgleich mit dem Temperaturmesswert der nächstgelegenen Wetterstation vorgenommen werden kann), so dass Temperaturabweichungen nach oben oder unten oder auch Temperaturschwankungen und/oder die UV-B-Strahlungsintensität (bzw. der UV-B-Lichteinfall) als Indiz für oder gegen eine Indoormontage gewertet werden können. UV-B Strahlung wird durch Fenster und Gebäudewände sehr stark oder sogar komplett absorbiert, so dass gemeinsam mit der Temperaturmessung eine Indooraufstellung der Antenneneinrichtung ermittelt werden kann, sollte der UV-B Anteil im Licht signifikant niedriger sein als erwartet.

Gemäß einer bevorzugten Ausführungsform der vorliegenden Erfindung ist es vorgesehen, dass die Sensoreinrichtung konfiguriert ist zur Messung
-- der Temperatur und/oder
-- der Ultraviolett-Strahlung oder eines oder mehrerer Teilbereiche davon und/oder
-- der Helligkeit und/oder
-- der Stärke des Signals der Funkverbindung.

Hierdurch ist es erfindungsgemäß vorteilhaft möglich, insbesondere durch die Messung mehrerer Messgrößen, besser abschätzen zu können, wo die Antenneneinrichtung angeordnet ist, d.h. insbesondere innerhalb oder außerhalb des Gebäudes. Eine Kombination von Temperaturmessungen und einer Messung (oder Messungen) der UV-B-Strahlungsintensität wurde bereits angesprochen; hierbei kommen insbesondere UV-Sensoren für den Wellenlängenbereich zwischen 100nm und 400 nm in Frage. Weitere Beispiele sind die Kombination aus Temperaturmessungen und Messungen verschiedener Teile bzw. Bänder des UV-Strahlungsbereichs, d.h. beispielsweise das Verhältnis von UV-A- zu UV-B-Strahlungsintensität und/oder das Verhältnis von UV-A- zu UV-C-Strahlungsintensität und/oder das Verhältnis von UV-B- zu UV-C-Strahlungsintensität, ggf. zusätzlich kombiniert mit Messungen der Intensität des sichtbaren Lichts, d.h. der Helligkeit. Ferner oder kombiniert hiermit kann auch eine Messung der Signalstärke des Funksignals herangezogen werden oder aber die Messwerte von anderen Umweltsensoren wie etwa Luftsensoren oder dergleichen.

Gemäß einer weiteren Ausführungsform der vorliegenden Erfindung ist es vorgesehen, dass die Funkverbindung zwischen der Antenneneinrichtung und der Gerätemanagementeinrichtung bei oder während der Inbetriebnahme der Antenneneinrichtung aufgebaut wird, wobei die im dritten Schritt erfolgende Übertragung der wenigstens einen Messwertinformation zur Gerätemanagementeinrichtung insbesondere nach Erhalt - durch die Antenneneinrichtung - einer Anforderungsnachricht von der Gerätemanagementeinrichtung erfolgt.

Hierdurch ist es erfindungsgemäß in vorteilhafter Weise möglich, dass die im dritten Schritt erfolgende Datenübertragung der wenigstens einen Messwertinformation zur Gerätemanagementeinrichtung durch die Gerätemanagementeinrichtung ausgelöst werden kann, d.h. diese Datenübertragung kann auf solche Fälle beschränkt werden, für die (aus der Sicht der Gerätemanagementeinrichtung) eine Ermittlung erforderlich ist oder zu sein scheint. Eine solche Anforderungsnachricht (an eine bestimmte Antenneneinrichtung) zur Übertragung der wenigstens einen Messwertinformation erfolgt seitens der Gerätemanagementeinrichtung erfindungsgemäß jedoch in der Regel dann, wenn zu der oder bezüglich der betrachteten Antenneneinrichtung eine Kundendienstanfrage (seitens eines Kunden, d.h. in der Regel des Benutzers genau dieser betrachteten Antenneneinrichtung) erfolgt oder ausgelöst wurde.

Gemäß einer weiteren Ausführungsform der vorliegenden Erfindung ist es vorgesehen, dass zur Ableitung, im vierten Schritt, der Indikatorinformation zusätzlich zu der wenigstens einen Messwertinformation wenigstens eine weitere Messwertinformation verwendet wird, insbesondere eine weitere Messwertinformation einer weiteren Antenneneinrichtung, wobei die weitere Antenneneinrichtung insbesondere zeitlich vor der Antenneneinrichtung in Betrieb genommen wurde und insbesondere in relativer räumlicher Nähe zur Antenneneinrichtung positioniert ist.

Durch die Berücksichtigung auch der wenigstens einen weiteren Messwertinformation der weiteren Antenneneinrichtung (die insbesondere zeitlich vor der Antenneneinrichtung in Betrieb genommen wurde und insbesondere in relativer räumlicher Nähe zur Antenneneinrichtung positioniert ist) ist es erfindungsgemäß vorteilhaft möglich, erwartete oder wahrscheinliche erwartete Messwertinformationen in der Gerätemanagementeinrichtung vorliegen zu haben, so dass die Ableitung der Indikatorinformation (bezogen auf die betrachtete Antenneneinrichtung) mit noch größerer Genauigkeit und/oder mit geringerem Aufwand möglich ist.

Gemäß einer weiteren Ausführungsform der vorliegenden Erfindung ist es vorgesehen, dass zur Ableitung, im vierten Schritt, der Indikatorinformation die wenigstens eine Messwertinformation:
-- eine oder mehrere Messwertinformationen ab dem Zeitpunkt der Inbetriebnahme der Antenneneinrichtung und/oder
-- eine oder mehrere Messwertinformationen vor dem Zeitpunkt der Inbetriebnahme der Antenneneinrichtung umfasst.

Hierdurch ist es gemäß solcher Ausführungsformen der Erfindung vorteilhaft möglich, dass auf der Grundlage von möglichst umfassenden Sensordaten bzw. Messwertinformationen - insbesondere auch hinsichtlich der Zeit, d.h. mehrerer Messwerte zu unterschiedlichen Zeitpunkten und/oder zu unterschiedlichen Tageszeiten etc. - die Indikatorinformation mit einem möglichst hohen Vertrauensniveau ermittelt bzw. generiert werden kann.

Gemäß einer weiteren Ausführungsform der vorliegenden Erfindung ist es vorgesehen, dass die Übertragung, im dritten Schritt, der wenigstens einen Messwertinformation und die Ableitung, im vierten Schritt, der Indikatorinformation wiederholt durchgeführt wird, insbesondere periodisch wiederholt durchgeführt wird und insbesondere nach Erhalt - durch die Antenneneinrichtung - wenigstens einer weiteren Anforderungsnachricht von der Gerätemanagementeinrichtung.

Hierdurch ist es gemäß der vorliegenden Erfindung in einfacher Weise möglich, eine noch bessere Validierung der abgeleiteten Indikatorinformation zu bewirken, weil zu unterschiedlichen Zeitpunkten und insbesondere periodisch wiederholt die Messung durchgeführt und auch die Messwertinformationen ausgewertet werden.

Gemäß einer weiteren Ausführungsform der vorliegenden Erfindung ist es vorgesehen, dass zur Ableitung, im vierten Schritt, der Indikatorinformation ein Modell maschinellen Lernens verwendet wird.

Hierdurch ist es erfindungsgemäß in vorteilhafter Weise möglich, dass die Ableitung der Indikatorinformation vergleichsweise einfach und effizient sowie vergleichsweise flexibel an sich ändernde Gegebenheiten anpassbar ausgestaltet werden kann.

Des Weiteren wird die Aufgabe gelöst durch ein System gemäß Anspruch 8.

Es ist dadurch gemäß der vorliegenden Erfindung in vorteilhafter Weise möglich, ein zum erfindungsgemäßen Verfahren korrespondierendes erfindungsgemäßes System bereitzustellen und somit zur Unterstützung des verbesserten Betriebs und zur Erkennung der Positionierung einer Antenneneinrichtung zu verwenden.

Ferner wird die Ausgabe gelöst durch eine Gerätemanagementeinrichtung gemäß Anspruch 9.

Es ist dadurch gemäß der vorliegenden Erfindung in vorteilhafter Weise möglich, eine zum erfindungsgemäßen Verfahren korrespondierende erfindungsgemäße Gerätemanagementeinrichtung bereitzustellen und somit zur Unterstützung des verbesserten Betriebs und zur Erkennung der Positionierung einer Antenneneinrichtung zu verwenden.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Gerätemanagementeinrichtung und einer programmierbaren Antenneneinrichtung, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf der programmierbaren Gerätemanagementeinrichtung und einer programmierbaren Antenneneinrichtung, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur** 1: zeigt eine schematische Ansicht eines Telekommunikationsnetzes zur Unterstützung des verbesserten Betriebs und zur Erkennung der Positionierung einer Antenneneinrichtung.
- **Figur** 2: zeigt schematisch ein Ablaufdiagramm für ein Verfahren, welches den verbesserten Betrieb und die Erkennung der Positionierung einer Antenneneinrichtung unterstützt.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequentiellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

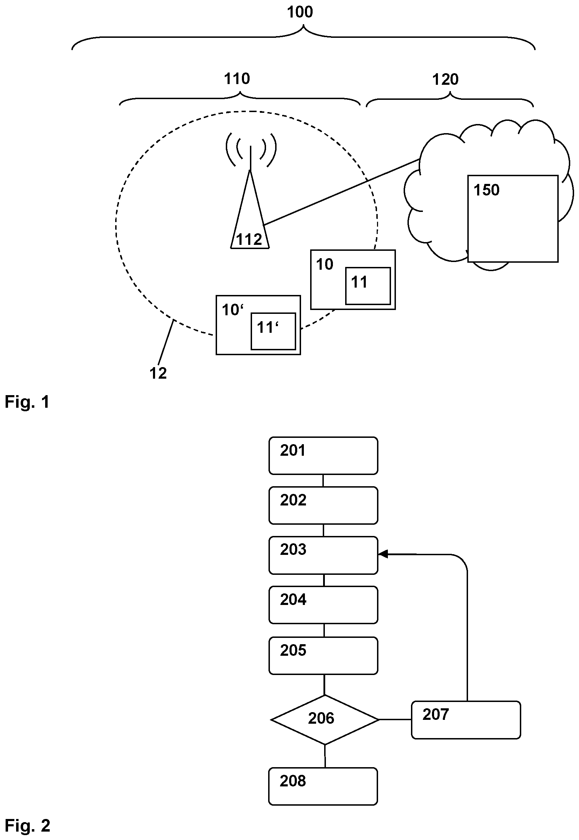

In Figur 1 ist ein Telekommunikationsnetz 100 zur Unterstützung des verbesserten Betriebs und zur Erkennung der Positionierung einer Antenneneinrichtung gemäß der vorliegenden Erfindung schematisch dargestellt. Das Telekommunikationsnetz 100 ist nach der beispielhaften Ausführungsform der Figur 1 als ein Mobilfunknetz oder Mobilfunkkommunikationsnetz implementiert, das ein Funkzugangsnetz 110 und ein Kernnetz 120 umfasst.

Das Funkzugangsnetz 110 des Telekommunikationsnetzes 100 umfasst bzw. besteht aus einer Vielzahl von Funkzellen, von denen lediglich eine erste Funkzelle 12 exemplarisch dargestellt ist. Die Funkzelle 12 entspricht einem geographischen Funkabdeckungsbereich von Basisstationseinheiten, typischerweise gNodeBs oder auch eNodeBs, von denen wiederum lediglich eine erste Basisstationseinheit 112 in Figur 1 schematisch dargestellt ist.

Das Telekommunikationsnetz 100 ist so konfiguriert, dass es Kommunikationsdienste für eine Vielzahl von Telekommunikationsendgeräten oder Telekommunikationsgeräten bereitstellt; Beispiele für solche Telekommunikationsendgeräte oder Telekommunikationsgeräte sind beispielsweise mobile Geräte wie beispielsweise Telefone - insbesondere sogenannte intelligente Telefone, etwa Smartphones -, Computer, tragbare oder mobile Computer wie etwa Tabletcomputer oder dergleichen. Weiterhin sind als Telekommunikationsendgeräte oder Telekommunikationsgeräte als Teilnehmer des Mobilfunkkommunikationsnetzes jedoch auch FWA-Antenneneinrichtungen zur vergleichsweise breitbandigen Funkanbindung - entsprechend etwa einer Netzanbindung oder eines Netzzugangs, die oder der auch mittels eines drahtgebundenen Anschlusses, etwa über eine DSL-Anbindung möglich ist (fixed wireless access) - von weiteren Kommunikationsgeräten, welche mit solchen FWA-Antenneneinrichtungen verbunden sind, vorgesehen. Bei solchen weiteren Kommunikationsgeräten handelt es sich beispielsweise um Router oder Routereinrichtungen oder auch um Homegatewayeinrichtungen und/oder CPE-Einrichtungen, customer premises equipment-Einrichtungen, welche ihrerseits zur Anbindung weiterer Geräte, etwa Telefone, Smartphones, Computer etc. vorgesehen sind oder aber um solche weiteren Geräte, etwa Telefone, Smartphones, Computer etc., die ohne weiteres Zwischenglied etwa in Form einer Routereinrichtung oder dergleichen mit der FWA-Antenneneinrichtung verbunden sind (bzw. im letzteren Fall integriert die FWA-Antenneneinrichtung insbesondere auch die Funktionalität einer Routereinrichtung). In Figur 1 sind beispielhaft eine Antenneneinrichtung 10 in Form einer FWA-Antenneneinrichtung 10 und eine weitere Antenneneinrichtung 10' in Form einer weiteren FWA-Antenneneinrichtung 10' als Teil der bzw. innerhalb der ersten Funkzelle 12 dargestellt. Alternativ zu der in Figur 1 wiedergegebenen Anordnung könnte die Antenneneinrichtung 10 auch als eine Basisstations-Antenneneinrichtung ausgebildet sein; in diesem Fall müsste eine in der Regel vergleichsweise hochbandbreitige Netzanbindung zum Telekommunikationsnetz 100 beispielsweise über eine Kabelverbindung zu einer solchen Basisstations-Antenneneinrichtung vorhanden sein (welche jedoch in Figur 1 nicht dargestellt ist). In diesem alternativen Szenario ist die Basisstations-Antenneneinrichtung in der Lage, die weitere Antenneneinrichtung 10' (welche als FWA-Antenneneinrichtung 10' ausgebildet ist) mit Internetkonnektivität zu versorgen bzw. diese ans Telekommunikationsnetz 100 anzubinden.

Als Teil insbesondere des Kernnetzes 120 des Mobilfunkkommunikationsnetzes 100 weist das Mobilfunkkommunikationsnetz 100 bzw. das Telekommunikationsnetz 100 eine Gerätemanagementeinrichtung 150 auf bzw. eine Gerätemanagementeinrichtung 150 ist dem Telekommunikationsnetz 100 zugeordnet. Die Gerätemanagementeinrichtung 150 dient dem Management der Antenneneinrichtungen 10, 10', d.h. über die Gerätemanagementeinrichtung 150 ist insbesondere eine Fernanalyse der Antenneneinrichtungen 10, 10' möglich bzw. es ist eine Datenübertragung zur Gerätemanagementeinrichtung 150 möglich, beispielsweise von Funktionsdaten der Antenneneinrichtungen 10, 10' oder auch von Daten bezüglich der Orientierung und/oder Positionierung der Antenneneinrichtungen 10, 10`.

Erfindungsgemäß ist insbesondere vorgesehen, dass ein verbesserter Betrieb und die Erkennung der Positionierung einer Antenneneinrichtungen 10, 10' dadurch ermöglicht wird, dass insbesondere eine Indikatorinformation über die Positionierung der Antenneneinrichtung 10 aus wenigstens einer Messwertinformation abgeleitet wird, wobei insbesondere ermittelt wird bzw. ermittelbar ist, ob die Antenneneinrichtung 10 innerhalb eines Gebäudes oder außerhalb des Gebäudes positioniert ist. Hierzu weist die Antenneneinrichtung 10 eine Sensoreinrichtung 11 auf (und die weitere Antenneneinrichtung 10' weist eine weitere Sensoreinrichtung 11' auf). Die Antenneneinrichtung 10 (und gleichermaßen auch die weitere Antenneneinrichtung 10`) ist mit der Gerätemanagementeinrichtung 150 mittels einer Funkverbindung verbindbar bzw. im Betrieb der Antenneneinrichtungen ist diese Funkverbindung in der Regel aufgebaut bzw. aktiviert.

Zur Durchführung des erfindungsgemäßen Verfahrens wird die Antenneneinrichtung 10 zunächst in oder an einem Gebäude positioniert und in Betrieb genommen.

Es findet ferner eine Erfassung von einer oder von mehreren Messwertinformationen durch die Sensoreinrichtung 11 der Antenneneinrichtung 10 statt. Diese Erfassung beginnt in der Regel jedenfalls nachdem die Antenneneinrichtung 10 in Betrieb genommen wurde (d.h. in der Regel nachdem die Antenneneinrichtung 10 an eine (insbesondere batterieunabhängige) Stromversorgung angeschlossen wurde). Allerdings ist es erfindungsgemäß auch möglich und bevorzugt vorgesehen, dass die Sensoreinrichtung 11 der Antenneneinrichtung 10 bereits eine oder mehrere Messwertinformationen (bzw. auch lediglich einen Teil der insgesamt durch die Sensoreinrichtung 11 erfassbaren Messwerte) erfasst, bevor die Antenneneinrichtung 10 in Betrieb genommen wurde - beispielsweise für den Fall, dass die Möglichkeit vorliegt, etwa mittels einer Pufferbatterie oder eines Akkus, bereits Messwertinformationen für einen Zeitraum zu erfassen, der vor der Inbetriebnahme der Antenneneinrichtung 10 liegt.

Erfindungsgemäß ist es vorgesehen, dass zumindest ein Teil der Messwertinformationen bzw. wenigstens eine Messwertinformation zur Gerätemanagementeinrichtung 150 übertragen wird, so dass auf dieser Grundlage in einem nachfolgenden Schritt die Indikatorinformation über die Positionierung der Antenneneinrichtung 10 aus der wenigstens einen Messwertinformation abgeleitet werden kann, insbesondere darüber, ob die Antenneneinrichtung 10 innerhalb des Gebäudes oder außerhalb des Gebäudes positioniert ist.

Dies ist schematisch im Ablaufdiagramm gemäß Figur 2 dargestellt:
In einem ersten Prozessschritt 201 wird die Antenneneinrichtung 10 am gewünschten Gebäude montiert, beispielsweise ein Zuhause oder ein Büro eines Kunden des Mobilfunkkommunikationsnetzes 100 oder des Telekommunikationsnetzes 100.

In einem zweiten Prozessschritt 202 wird die Antenneneinrichtung 10 initialisiert (bzw. initialisiert sich selbst), in der Regel nachdem diese an eine (typischerweise batterieunabhängige) Stromversorgung angeschlossen wurde.

In einem dritten Prozessschritt 203 wird eine Verbindung - in der Regel eine Funkverbindung - hergestellt zwischen der Antenneneinrichtung 10 einerseits und dem Mobilfunkkommunikationsnetz 100 andererseits, insbesondere zur Gerätemanagementeinrichtung 150, d.h. die Antenneneinrichtung 10 verbindet sich typischerweise mit dem nächstgelegen 5G Funkmast (d.h. einer Basisstation bzw. eine Basisstationseinrichtung) und darüber dann an den Provider Backbone bzw. des Gerätemanagementeinrichtung 150.

In einem vierten Prozessschritt 204 werden durch die Sensoreinrichtung 11 erfasste Messwertinformationen (bzw. wenigstens eine Messwertinformation) zur Gerätemanagementeinrichtung 150 (d.h. an den Backbone) übertragen, d.h. typischerweise beginnend mit der Inbetriebnahme der Antenneneinrichtung 10 (jedoch ggf. und zumindest in Teil bereits zeitlich davor) werden Messwertinformationen durch die Sensoreinrichtung 11 erfasst, etwa in Form der Umweltdaten UV Strahlungsintentität, aktuelle Uhrzeit, weitere Umweltsensoren wie z.B. Helligkeit, Temperatur, etc.

Aufgrund der empfangenen Daten bzw. Messwertinformationen ist es dem Gerätemanagementeinrichtung 150 (bzw. dem Backbone) in einem fünften Prozessschritt 205 möglich, eine Indikatorinformation über die Positionierung der Antenneneinrichtung 10 zu bestimmen oder abzuleiten, d.h. der Backbone ermittelt aufgrund der empfangenen Daten für die Antenneneinrichtung 10 eine wahrscheinliche Positionsinformation ("location likelyhood information"), insbesondere darüber, ob die Antenneneinrichtung 10 in einem (bzw. dem) Gebäude oder ausserhalb davon (bzw. an dessen Außenseite) installiert ist.

Je nach ermitteltem Wert der Indikatorinformation wird in einem sechsten Prozessschritt 206 entweder zu einem siebten Prozessschritt 207 oder zu einem achten Prozessschritt 208 verzweigt. Wenn der ermittelte Wert der Indikatorinformation darauf hindeutet, dass die Antenneneinrichtung 10 als außerhalb des Gebäudes positioniert oder angeordnet anzusehen ist, wird zum siebten Prozessschritt 207 verzweigt, andernfalls zum achten Prozessschritt 208.

Im siebten Prozessschritt 207 wird zur Wiederholung der Messung - insbesondere bei erneuter Inbetriebnahme (nach Stromlosschalten) zum dritten Prozessschritt 203 verzweigt.

Im achten Prozessschritt 208 wurde die Antenneneinrichtung 10 als innerhalb des Gebäudes positioniert erkannt, weshalb eine Fehlersituation signalisiert wird,

insbesondere ist vorgesehen ein Service Team hierüber zu benachrichtigen, so dass eine Kundenbenachrichtigung über die fehlerhafte Montage der Antenneneinrichtung 10 erfolgen kann.

## Patentansprüche

1. Verfahren zur Unterstützung des verbesserten Betriebs und zur Erkennung der Positionierung einer Antenneneinrichtung (10) zur Benutzung mit oder in einem Telekommunikationsnetz (100), wobei das Telekommunikationsnetz (100) eine Gerätemanagementeinrichtung (150) aufweist oder eine Gerätemanagementeinrichtung (150) dem Telekommunikationsnetz (100) zugeordnet ist, wobei die Antenneneinrichtung (10) eine Sensoreinrichtung (11) aufweist und wobei die Antenneneinrichtung (10) mit der Gerätemanagementeinrichtung (150) mittels einer Funkverbindung verbindbar ist, wobei das Verfahren die nachfolgenden Schritte umfasst:
-- in einem ersten Schritt wird die Antenneneinrichtung (10) in oder an einem Gebäude positioniert und in Betrieb genommen
-- in einem zeitlich nach, während und/oder vor dem ersten Schritt erfolgenden zweiten Schritt erfasst die Sensoreinrichtung (11) wenigstens eine Messwertinformation,
-- in einem dem zweiten Schritt nachfolgenden dritten Schritt wird die wenigstens eine Messwertinformation zur Gerätemanagementeinrichtung (150) übertragen, **dadurch gekennzeichnet, dass**
-- in einem dem dritten Schritt nachfolgenden vierten Schritt wenigstens aus der wenigstens einen Messwertinformation eine Indikatorinformation über die Positionierung der Antenneneinrichtung (10) darüber abgeleitet wird, ob die Antenneneinrichtung (10) innerhalb des Gebäudes oder außerhalb des Gebäudes positioniert ist.

2. Verfahren nach Anspruch 1, **dadurch gekennzeichnet, dass** die Sensoreinrichtung (11) konfiguriert ist zur Messung
-- der Temperatur und/oder
-- der Ultraviolett-Strahlung oder eines oder mehrerer Teilbereiche davon und/oder
-- der Helligkeit und/oder
-- der Stärke des Signals der Funkverbindung.

3. Verfahren nach einem der vorhergehenden Ansprüche, **dadurch gekennzeichnet, dass** die Funkverbindung zwischen der Antenneneinrichtung (10) und der Gerätemanagementeinrichtung (150) bei oder während der Inbetriebnahme der Antenneneinrichtung (10) aufgebaut wird, wobei die im dritten Schritt erfolgende Übertragung der wenigstens einen Messwertinformation zur Gerätemanagementeinrichtung (150) insbesondere nach Erhalt - durch die Antenneneinrichtung (10) - einer Anforderungsnachricht von der Gerätemanagementeinrichtung (150) erfolgt.

4. Verfahren nach einem der vorhergehenden Ansprüche, **dadurch gekennzeichnet, dass** zur Ableitung, im vierten Schritt, der Indikatorinformation zusätzlich zu der wenigstens einen Messwertinformation wenigstens eine weitere Messwertinformation verwendet wird, insbesondere eine weitere Messwertinformation einer weiteren Antenneneinrichtung (10'), wobei die weitere Antenneneinrichtung (10') insbesondere zeitlich vor der Antenneneinrichtung (10) in Betrieb genommen wurde und insbesondere in relativer räumlicher Nähe zur Antenneneinrichtung (10) positioniert ist.

5. Verfahren nach einem der vorhergehenden Ansprüche, **dadurch gekennzeichnet, dass** zur Ableitung, im vierten Schritt, der Indikatorinformation die wenigstens eine Messwertinformation:
-- eine oder mehrere Messwertinformationen ab dem Zeitpunkt der Inbetriebnahme der Antenneneinrichtung (10) und/oder
-- eine oder mehrere Messwertinformationen vor dem Zeitpunkt der Inbetriebnahme der Antenneneinrichtung (10)
umfasst.

6. Verfahren nach einem der vorhergehenden Ansprüche, **dadurch gekennzeichnet, dass** die Übertragung, im dritten Schritt, der wenigstens einen Messwertinformation und die Ableitung, im vierten Schritt, der Indikatorinformation wiederholt durchgeführt wird, insbesondere periodisch wiederholt durchgeführt wird und insbesondere nach Erhalt - durch die Antenneneinrichtung (10) - wenigstens einer weiteren Anforderungsnachricht von der Gerätemanagementeinrichtung (150).

7. Verfahren nach einem der vorhergehenden Ansprüche, **dadurch gekennzeichnet, dass** zur Ableitung, im vierten Schritt, der Indikatorinformation ein Modell maschinellen Lernens verwendet wird.

8. System zur Unterstützung des verbesserten Betriebs und zur Erkennung der Positionierung einer Antenneneinrichtung (10), zur Benutzung mit oder in einem Telekommunikationsnetz (100), wobei das Telekommunikationsnetz (100) eine Gerätemanagementeinrichtung (150) aufweist oder eine Gerätemanagementeinrichtung (150) dem Telekommunikationsnetz (100) zugeordnet ist, wobei die Antenneneinrichtung (10) eine Sensoreinrichtung (11) aufweist und wobei die Antenneneinrichtung (10) mit der Gerätemanagementeinrichtung (150) mittels einer Funkverbindung verbindbar ist, wobei das System derart konfiguiert ist, dass:
-- die Antenneneinrichtung (10) in oder an einem Gebäude positioniert und in Betrieb genommen wird
-- die Sensoreinrichtung (11) wenigstens eine Messwertinformation erfasst,
-- die wenigstens eine Messwertinformation zur Gerätemanagementeinrichtung (150) übertragen wird, **dadurch gekennzeichnet, dass**
-- wenigstens aus der wenigstens einen Messwertinformation eine Indikatorinformation über die Positionierung der Antenneneinrichtung (10) darüber abgeleitet wird, ob die Antenneneinrichtung (10) innerhalb des Gebäudes oder außerhalb des Gebäudes positioniert ist.

9. Gerätemanagementeinrichtung (150) zur Unterstützung des verbesserten Betriebs und zur Erkennung der Positionierung einer zugeordneten Antenneneinrichtung (10), zur Benutzung mit oder in einem Telekommunikationsnetz (100), wobei die Gerätemanagementeinrichtung (150) mit der Antenneneinrichtung (10) mittels einer Funkverbindung verbindbar ist, wobei die Gerätemanagementeinrichtung (150) derart konfiguiert ist, dass:
-- zeitlich nach Positionierung in oder an einem Gebäude, Inbetriebnahme der Antenneneinrichtung (10) und Erfassung wenigstens einer Messwertinformation durch eine Sensoreinrichtung (11) der Antenneneinrichtung (10),
-- die Gerätemanagementeinrichtung (150) die wenigstens eine Messwertinformation von der Antenneneinrichtung (10) empfängt, und **dadurch gekennzeichnet, dass**
-- wenigstens aus der wenigstens einen Messwertinformation eine Indikatorinformation über die Positionierung der Antenneneinrichtung (10) darüber ableitet, ob die Antenneneinrichtung (10) innerhalb des Gebäudes oder außerhalb des Gebäudes positioniert ist.

10. Computerprogramm umfassend Befehle, mit deren Hilfe die Schritte eines Verfahrens nach einem der Ansprüche 1 bis 7 durchführbar sind, wenn das Computerprogramm auf einer programmierbaren Gerätemanagementeinrichtung (150) und einer programmierbaren Antenneneinrichtung (10), ausgeführt wird.

11. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 10 speichert oder überträgt oder wobei das computerlesbare Medium oder das Datenträgersignal den auf der programmierbaren Gerätemanagementeinrichtung (150) und einer programmierbaren Antenneneinrichtung (10), auszuführenden Teil des Computerprogramms nach Anspruch 10 speichert oder überträgt.

## Claims

1. Method for supporting the enhanced operation and for detecting the positioning of an antenna device (10) for use with or in a telecommunications network (100), wherein the telecommunications network (100) has an apparatus management device (150), or an apparatus management device (150) is allocated to the telecommunications network (100), wherein the antenna device (10) has a sensor device (11) and wherein the antenna device (10) can be connected to the apparatus management device (150) by means of a radio link, wherein the method comprises the steps of:
- in a first step, the antenna device (10) is positioned in or on a building and put into operation
- in a second step which is performed chronologically after, during and/or before the first step, the sensor device (11) acquires at least one item of measured value information,
- in a third step which follows the second step, the at least one item of measured value information is transmitted to the apparatus management device (150), **characterised in that**
- in a fourth step which follows the third step, an item of indicator information regarding the positioning of the antenna device (10) as to whether the antenna device (10) is positioned inside the building or outside the building is derived at least from the at least one item of measured value information.

2. Method as claimed in claim 1, **characterised in that** the sensor device (11) is configured to measure
- the temperature and/or
- the ultraviolet radiation or one or more sub-ranges thereof and/or
- the brightness and/or
- the strength of the signal of the radio link.

3. Method as claimed in any one of the preceding claims, **characterised in that** the radio link between the antenna device (10) and the apparatus management device (150) is established at or during the time the antenna device (10) is put into operation, wherein the transmission of the at least one item of measured value information to the apparatus management device (150) which is performed in a third step is performed after receipt -by the antenna device (10) - of a request message from the apparatus management device (150).

4. Method as claimed in any one of the preceding claims, **characterised in that** in order to derive, in the fourth step, the item of indicator information, in addition to the at least one item of measured value information, at least one further item of measured value information is used, in particular a further item of measured value information of a further antenna device (10'), wherein the further antenna device (10') has been put into operation in particular chronologically before the antenna device (10) and is positioned in particular in relative spatial proximity to the antenna device (10).

5. Method as claimed in any one of preceding claims, **characterised in that** in order to derive, in the fourth step, the item of indicator information, the at least one item of measured value information comprises:
- one or more items of measured value information from the point in time, at which the antenna device (10) is put into operation and/or
- one or more items of measured value information before the point in time, at which the antenna device (10) is put into operation.

6. Method as claimed in any one of the preceding claims, **characterised in that** the transmission, in the third step, of the at least one item of measured value information and the deriving, in the fourth step, of the item of indicator information is performed repeatedly, in particular is performed repeatedly periodically and in particular after receipt - by the antenna device (10) - of at least one further request message from the apparatus management device (150) .

7. Method as claimed in any one of the preceding claims, **characterised in that** a machine learning model is used in order to derive, in the fourth step, the item of indicator information.

8. System for supporting the enhanced operation and for detecting the positioning of an antenna device (10) for use with or in a telecommunications network (100), wherein the telecommunications network (100) has an apparatus management device (150), or an apparatus management device (150) is allocated to the telecommunications network (100), wherein the antenna device (10) has a sensor device (11) and wherein the antenna device (10) can be connected to the apparatus management device (150) by means of a radio link, wherein the system is configured such that:
- the antenna device (10) is positioned in or on a building and put into operation
- the sensor device (11) acquires at least one item of measured value information,
- the at least one item of measured value information is transmitted to the apparatus management device (150), **characterised in that**
- an item of indicator information regarding the positioning of the antenna device (10) as to whether the antenna device (10) is positioned inside the building or outside the building is derived at least from the at least one item of measured value information.

9. Apparatus management device (150) for supporting the enhanced operation and for detecting the positioning of an allocated antenna device (10), for use with or in a telecommunications network (100), wherein the apparatus management device (150) can be connected to the antenna device (10) by means of a radio link, wherein the apparatus management device (150) is configured such that:
- chronologically after positioning in or on a building, putting into operation of the antenna device (10) and acquisition of at least one item of measured value information by a sensor device (11) of the antenna device (10),
- the apparatus management device (150) receives the at least one item of measured value information from the antenna device (10), and **characterised in that**
- an item of indicator information regarding the positioning of the antenna device (10) as to whether the antenna device (10) is positioned inside the building or outside the building is derived at least from the at least one item of measured value information.

10. Computer program comprising instructions, with the aid of which the steps of a method as claimed in any one of claims 1 to 7 can be carried out when the computer program is executed on a programmable apparatus management device (150) and a programmable antenna device (10).

11. Computer-readable medium, provided for storing a computer program or a data carrier signal, provided for transmitting a computer program, wherein the computer-readable medium or the data carrier signal stores or transmits the computer program as claimed in claim 10 or wherein the computer-readable medium or the data carrier signal stores or transmits the part of the computer program as claimed in claim 10 which is to be executed on the programmable apparatus management device (150) and a programmable antenna device (10).

## Revendications

1. Procédé d'aide au fonctionnement amélioré et à la détection du positionnement d'un dispositif à antenne (10) à utiliser avec ou dans un réseau de télécommunications (100), dans lequel le réseau de télécommunications (100) comporte un dispositif de gestion d'appareils (150) ou un dispositif de gestion d'appareils (150) est associé au réseau de télécommunications (100), dans lequel le dispositif à antenne (10) comporte un dispositif de capteur (11) et dans lequel le dispositif à antenne (10) peut être connecté au dispositif de gestion d'appareils (150) au moyen d'une liaison radio, dans lequel le procédé comprend les étapes suivantes consistant à :
- à une première étape, le dispositif à antenne (10) est positionné dans ou sur un bâtiment et est mis en service,
- à une deuxième étape résultante située chronologiquement avant, pendant et/ou avant la première étape, le dispositif de capteur (11) détecte au moins une information de valeur de mesure,
- à une troisième étape qui suit la deuxième étape, la au moins une information de valeur mesurée est transmise au dispositif de gestion d'appareils (150), **caractérisé en ce que**
- à une quatrième étape qui suit la troisième étape, une information d'indication concernant le positionnement du dispositif à antenne (10) est déduite au moins de la au moins une information de valeur mesurée, pour déterminer si le dispositif à antenne (10) est positionné à l'intérieur du bâtiment ou à l'extérieur du bâtiment.

2. Procédé selon la revendication 1, **caractérisé en ce que** le dispositif de capteur (11) est configuré pour mesurer
- la température et/ou
- le rayonnement ultraviolet ou une ou plusieurs zones partielles de celui-ci et/ou
- la luminosité et/ou
- la force du signal de la liaison radio.

3. Procédé selon l'une des revendications précédentes, **caractérisé en ce que** la liaison radio entre le dispositif à antenne (10) et le dispositif de gestion d'appareils (150) est établie pendant ou lors de la mise en service du dispositif à antenne (10), dans lequel la transmission résultant de la troisième étape de la au moins une information de valeur mesurée au dispositif de gestion d'appareils (150) a lieu en particulier après l'obtention - par le dispositif à antenne (10) - d'un message de requête provenant du dispositif de gestion d'appareils (150).

4. Procédé selon l'une des revendications précédentes, **caractérisé en ce que** pour déduire, à la quatrième étape, l'information d'indication en plus de la au moins une information de valeur mesurée, au moins une information de valeur mesurée supplémentaire est utilisée, en particulier une information de valeur mesurée supplémentaire d'un dispositif à antenne supplémentaire (10'), dans lequel le dispositif à antenne supplémentaire (10') a été en particulier mis en service chronologiquement avant le dispositif à antenne (10) et est en particulier positionné à proximité relative du dispositif à antenne (10).

5. Procédé selon l'une des revendications précédentes, **caractérisé en ce que** pour déduire, à la quatrième étape, l'information d'indication, la au moins une information de valeur mesurée comprend :
- une ou plusieurs informations de valeur mesurée à partir de l'instant où le dispositif à antenne (10) a été mis en service et/ou
- une ou plusieurs informations de valeur mesurée avant l'instant où le dispositif à antenne (10) a été mis en service.

6. Procédé selon l'une des revendications précédentes, **caractérisé en ce que** la transmission, à la troisième étape, de la au moins une information de valeur mesurée et la déduction, à la quatrième étape, de l'information d'indication sont réalisées de manière répétée, en particulier de façon périodique et en particulier après l'obtention - par le dispositif à antenne (10) - d'au moins un message de requête supplémentaire provenant du dispositif de gestion d'appareils (150).

7. Procédé selon l'une des revendications précédentes, **caractérisé en ce que** pour déduire, à la quatrième étape, l'information d'indication, un modèle d'apprentissage automatique est utilisé.

8. Système d'aide au fonctionnement amélioré et à la détection du positionnement d'un dispositif à antenne (10), à utiliser avec ou dans un réseau de télécommunications (100), dans lequel le réseau de télécommunications (100) comporte un dispositif de gestion d'appareils (150) ou un dispositif de gestion d'appareils (150) est associé au réseau de télécommunications (100), dans lequel le dispositif à antenne (10) comporte un dispositif de capteur (11) et dans lequel le dispositif à antenne (10) peut être connecté au dispositif de gestion d'appareils (150) au moyen d'une liaison radio, dans lequel le système est configuré de telle sorte que :
- le dispositif à antenne (10) est positionné dans ou sur un bâtiment et est mis en service,
- le dispositif de capteur (11) détecte au moins une information de valeur mesurée,
- la au moins une information de valeur mesurée est transmise au dispositif de gestion d'appareils (150), **caractérisé en ce que**
- une information d'indication concernant le positionnement du dispositif à antenne (10) est déduite au moins de la au moins une information de valeur mesurée, pour déterminer si le dispositif à antenne (10) est positionné à l'intérieur du bâtiment ou à l'extérieur du bâtiment.

9. Dispositif de gestion d'appareils (150) destiné à aider au fonctionnement amélioré et à la détection du positionnement d'un dispositif à antenne (10) associé, à utiliser avec ou dans un réseau de télécommunications (100), dans lequel le dispositif de gestion d'appareils (150) peut être connecté au dispositif à antenne (10) au moyen d'une liaison radio, dans lequel le dispositif de gestion d'appareils (150) est configuré de telle sorte que :
- chronologiquement après le positionnement dans ou sur un bâtiment, le dispositif à antenne (10) est mis en service et au moins une information de valeur mesurée est détectée par un dispositif de capteur (11) du dispositif à antenne (10),
- le dispositif de gestion d'appareils (150) reçoit la au moins une information de valeur mesurée provenant du dispositif à antenne (10), et **caractérisé en ce que**
- une information d'indication concernant le positionnement du dispositif à antenne (10) est déduite au moins de la au moins une information de valeur mesurée, pour déterminer si le dispositif à antenne (10) est positionné à l'intérieur du bâtiment ou à l'extérieur du bâtiment.

10. Programme informatique comprenant des instructions au moyen desquelles les étapes d'un procédé selon l'une des revendications 1 à 7 peuvent être réalisées, lorsque le programme informatique est exécuté sur un dispositif de gestion d'appareils (150) programmable et un dispositif à antenne (10) programmable.

11. Support lisible par ordinateur, destiné à stocker un programme informatique ou un signal porteur de données, destiné à transmettre un programme informatique, dans lequel le support lisible par ordinateur ou le signal porteur de données stocke ou transmet le programme informatique selon la revendication 10 ou dans lequel le support lisible par ordinateur ou le signal porteur de données stocke ou transmet la partie du programme informatique selon la revendication 10 à exécuter sur le dispositif de gestion d'appareils (150) programmable et sur un dispositif à antenne (10) programmable.
